# EUROPÄISCHE PATENTSCHRIFT

(11) **EP 2 556 976 B1**
(45) Veröffentlichungstag und Bekanntmachung des Hinweises auf die Patenterteilung: **21.11.2018**
(21) Anmeldenummer: 12179653.6
(22) Anmeldetag: 08.08.2012
(51) Int. Cl.: B60J 7/10, B60J 5/06

(54) **Verschlussvorrichtung für eine Plane eines Nutzfahrzeugaufbaus und Nutzfahrzeugaufbau mit einer derartigen Verschlussvorrichtung**
Locking device for the tarpaulin of a commercial vehicle structure and commercial vehicle structure with such a locking device
Dispositif de verrouillage pour une bâche d'une structure de véhicule utilitaire et structure de véhicule utilitaire dotée d'un tel dispositif de verrouillage

(30) Priorität: 11.08.2011 DE 102011052579
(43) Veröffentlichungstag der Anmeldung: 13.02.2013
(73) Patentinhaber: Kögel Trailer GmbH & Co. KG, 89349 Burtenbach (DE)
(72) Erfinder: Kreis, Reinhard, 89356 Haldenwang/Konzenberg (DE)
(74) Vertreter: Kilchert, Jochen

(56) Entgegenhaltungen:
- EP-A2- 0 569 039
- EP-A2- 1 254 801
- WO-A1-2006/089347
- DE-U1- 29 614 478

## Beschreibung

Die Erfindung betrifft eine Verschlussvorrichtung für eine Plane eines Nutzfahrzeugaufbaus sowie einen Nutzfahrzeugaufbau mit einer derartigen Verschlussvorrichtung. Eine Verschlussvorrichtung gemäß dem Oberbegriff des Patentanspruchs 1 ist beispielsweise aus DE 296 14 478 U1 bekannt.

DE 296 14 478 U1 offenbart eine Verschlussvorrichtung, die eine in den Rahmen des Nutzfahrzeugs integrierte Welle aufweist. An der Welle sind mehrere Greifhaken angeordnet, die in entsprechende Öffnungen der Seitenplane des Nutzfahrzeugs eingreifen können. Die Welle ist drehbar gelagert und über einen Handhebel betätigbar.

Zum Spannen der Plane wird der Handhebel betätigt, so dass sich die an der Welle angeordneten Haken verschwenken. Dabei greifen die Haken in die korrespondierenden Öffnungen in der Plane ein und ziehen die Plane über den Rahmen des Nutzfahrzeugs. Dabei wird die Plane gespannt.

Der Nachteil der bekannten Verschlussvorrichtung bzw. Spannvorrichtung besteht darin, dass die Welle in das Nutzfahrzeug, konkret in den Nutzfahrzeugrahmen, integriert ist. Bei der bekannten Vorrichtung ist also bereits beim Herstellungsprozess des Nutzfahrzeugaufbaus darauf zu achten, dass eine Welle integriert wird bzw. entsprechende Vorrüstungen dafür getroffen werden.

Aus WO 2006/089347 A1 ist eine Verschlussvorrichtung bekannt, die einen Pneumatikzylinder als Betätigungseinrichtung aufweist. Die Betätigungseinrichtung wirkt über einen Hebel auf eine Welle, die mehrere Kurbeln aufweist. Die Kurbeln greifen in Spannhaken einer Seitenplane ein und ermöglicht so das gleichzeitige Spannen der Seitenplane über eine große Länge.

Eine ähnliche Verschlussvorrichtung ist aus EP 1 254 801 A2 bekannt, wobei die Betätigungsrichtung jedoch durch einen Elektromotor gebildet ist, der über eine Endlosschraube auf die Welle einwirkt.

EP 0 569 039 A2 befasst sich ebenfalls mit einer Welle mit einem Fortsatz zum Greifen von Planenspannern und zum Spannen der Seitenplane.

Die Aufgabe der Erfindung besteht darin, eine Verschlussvorrichtung für eine Plane eines Nutzfahrzeugaufbaus anzugeben, die einerseits das Verschließen der Plane vereinfacht und andererseits einfach nachrüstbar ist. Ferner liegt der Erfindung die Aufgabe zugrunde, einen Nutzfahrzeugaufbau mit einer derartigen Verschlussvorrichtung anzugeben.

Erfindungsgemäß wird diese Aufgabe im Hinblick auf die Verschlussvorrichtung durch den Gegenstand des Patentanspruchs 1 und im Hinblick auf den Nutzfahrzeugaufbau durch den Gegenstand des Patentanspruchs 10 gelöst.

Die Erfindung beruht auf dem Gedanken, eine Verschlussvorrichtung für eine Plane eines Nutzfahrzeugaufbaus mit einer Welle und einer Betätigungseinrichtung anzugeben, wobei die Welle wenigstens einen seitlichen Fortsatz aufweist, der zum Eingriff in einem Spannhaken der Plane angepasst ist. Die Welle ist mit der Betätigungseinrichtung derart gekoppelt, dass der Fortsatz durch die Betätigungseinrichtung von einer Öffnungsstellung in eine Schließ- bzw. Spannstellung bewegbar ist. Die Welle ist in einer Wellenaufnahme drehbar gelagert, die mit einer Außenfläche eines Außenrahmens des Nutzfahrzeugaufbaus verbindbar oder fest verbunden ist. Die Wellenaufnahme bildet dabei ein Gehäuse, das die Welle zumindest abschnittsweise umschließt.

Die erfindungsgemäße Verschlussvorrichtung bildet somit eine kompakte Baueinheit, die einfach an einen bestehenden Nutzfahrzeugaufbau nachrüstbar ist. Durch die Anordnung der Welle in einer Wellenaufnahme ist die Montage der Verschlussvorrichtung vereinfacht, da ein Zusammenfügen mehrerer Einzelbestandteile der Verschlussvorrichtung bereits bei der Herstellung der Verschlussvorrichtung erfolgt. Somit kann die erfindungsgemäße Verschlussvorrichtung einfach und schnell, praktisch im laufenden Betrieb, vor Ort an einem Nutzfahrzeugaufbau montiert werden.

Grundsätzlich besteht ein Vorteil der Verschlussvorrichtung darin, dass, insbesondere bei Verwendung von mehreren Fortsätzen an der Welle, der Zeitaufwand zum Verschließen und/oder Spannen der Plane des Nutzfahrzeugs reduziert wird. Mit der erfindungsgemäßen Verschlussvorrichtung wird konkret erreicht, dass mehrere Spannhaken über eine einzige Verschlussvorrichtung gegriffen und somit ein relativ großer Bereich der Plane, insbesondere die gesamte Plane, durch eine einzige Betätigung der Verschlussvorrichtung gespannt wird. Dies reduziert den Zeitaufwand beim Be- und Entladevorgang eines Nutzfahrzeugs, was entsprechende wirtschaftliche Vorteile mit sich zieht.

Die Wellenaufnahme ist an einer Außenfläche des Außenrahmens anordenbar oder angeordnet. Eine derartige Platzierung der Wellenaufnahme trägt zu einem weiteren Vereinfachen der Montage der Verschlussvorrichtung bei. Die Außenfläche des Außenrahmens ist besonders leicht zugänglich, wodurch eine schnelle Nachrüstung eines Nutzfahrzeugaufbaus mit der Verschlussvorrichtung sichergestellt ist. Besonders bevorzugt ist die Anordnung der Wellenaufnahme an einer seitlichen Außenfläche des Außenrahmens. Die Wellenaufnahme kann auch mit einer unteren Außenfläche des Nutzfahrzeugrahmens, die vorzugsweise an die seitliche Außenfläche angrenzt, verbindbar oder fest verbunden sein.

Die Wellenaufnahme kann wenigstens einen seitlich vorstehenden Flansch mit wenigstens einer Durchgangsbohrung für die Aufnahme von Schrauben zur Verbindung mit dem Außenrahmen aufweisen. Die für die Verbindung der Wellenaufnahme mit dem Außenrahmen vorgesehenen Befestigungsabschnitte der Wellenaufnahme, insbesondere der Flansch, sind im Allgemeinen vorzugsweise leicht zugänglich angeordnet. Der seitlich vorstehende Flansch gewährleistet somit eine leichte Zugänglichkeit des Befestigungsabschnitts der Wellenaufnahme, so dass die schnelle und einfache Nachrüstbarkeit der Verschlussvorrichtung auch durch die entsprechende Konstruktion der Verbindungselemente bzw. Befestigungsabschnitte gewährleistet ist.

Bei einer bevorzugten Ausführungsform der erfindungsgemäßen Verschlussvorrichtung ist die Betätigungseinrichtung durch eine Doppelschwinge mit der Welle gekoppelt. Die Betätigungseinrichtung kann einen Linearantrieb aufweisen. Durch die Doppelschwinge wird sichergestellt, dass die Verschlussvorrichtung eine kompakte Baugröße aufweist. Die Verschlussvorrichtung ist somit an einer Vielzahl von bestehenden Nutzfahrzeugaufbauten nachrüstbar. Auch bei Nutzfahrzeugaufbauten, die einen kleinen Einbauraum vorweisen, ist die Verschlussvorrichtung einsetzbar.

Die Betätigungseinrichtung kann in einer vorteilhaften Ausführungsform einen pneumatischen oder elektrischen oder hydraulischen Antrieb aufweisen. Derartige Antriebe sind einfach fernsteuerbar, so dass über die Länge eines gesamten Nutzfahrzeugaufbaus mehrere Verschlussvorrichtungen, die jeweils eine Betätigungseinrichtung aufweisen, gleichzeitig fernbetätigbar sind. Beispielsweise kann eine entsprechende Schaltvorrichtung am Nutzfahrzeugaufbau vorgesehen sein, über die der Fahrer des Nutzfahrzeugs die Verschlussvorrichtungen, insbesondere die einer einzigen Plane zugeordneten Verschlussvorrichtungen, gleichzeitig betätigen kann. Die vorgenannten Antriebsarten ermöglichen also eine weitere Verbesserung des Gesamtsystems und insbesondere eine hohe Zeitersparnis beim Verschließen einer Plane des Nutzfahrzeugaufbaus.

Die Betätigungseinrichtung kann einen Federspeicher umfassen. Durch den Einsatz eines Federspeichers wird eine Sicherung bereitgestellt, die verhindert, dass die Verschlussvorrichtung sich selbsttätig öffnet. Vorzugsweise ist vorgesehen, dass der Federspeicher in der Schließ- bzw. Spannstellung der Fortsätze der Verschlussvorrichtung entlastet ist. In der Öffnungsstellung der Fortsätze der Verschlussvorrichtung ist der Federspeicher hingegen gespannt, so dass beispielsweise bei einer Fehlfunktion der Betätigungseinrichtung der Federspeicher aktiviert und die Verschlussvorrichtung in die Schließ- bzw. Spannstellung überführt wird. In Kombination mit einem pneumatischen oder elektrischen oder hydraulischen Antrieb, stellt der Federspeicher sicher, dass die Schließstellung bzw. Spannstellung der Verschlussvorrichtung eingenommen wird, wenn beispielsweise bei einem pneumatischen Antrieb der Luftdruck im pneumatischen Antriebszylinder absinkt, bei einem elektrischen Antrieb ein Spannungsabfall auftritt oder bei einem hydraulischen Antrieb der Hydraulikdruck abfällt.

Die Betätigungseinrichtung ist vorzugsweise unterhalb eines Ladebodens des Nutzfahrzeugaufbaus anordenbar. Im Hinblick auf eine kompakte Bauweise der Verschlussvorrichtung hat es sich als vorteilhaft erwiesen, die Betätigungseinrichtung derart an der Verschlussvorrichtung anzubringen, dass die Betätigungseinrichtung unterhalb des Ladebodens, insbesondere auf Höhe des Außenrahmens angeordnet ist. Üblicherweise sind bei bestehenden Nutzfahrzeugaufbauten unterhalb des Ladebodens ausreichend Freiräume vorhanden, so dass die Betätigungseinrichtung nachträglich in einen Nutzfahrzeugaufbau integrierbar ist.

Ferner wird durch die Möglichkeit, die Betätigungseinrichtung unter einem Ladeboden anzuordnen vermieden, dass entweder das Ladevolumen beeinträchtigt oder die Außenmaße des Nutzfahrzeugaufbaus verändert werden.

In einer bevorzugten Ausführungsform der erfindungsgemäßen Verschlussvorrichtung ist der Fortsatz an der Welle plattenartig oder paddelartig ausgebildet.

Konkret kann der Fortsatz im Wesentlichen quaderförmig ausgebildet sein. Der Fortsatz ist seitlich an der Welle angeordnet bzw. steht über die Umfangsfläche der Welle vor. Die paddel- bzw. plattenartige Ausbildung des Fortsatzes reicht aus, um sicherzustellen, dass Spannhaken einer Plane, wie sie bei Nutzfahrzeugaufbauten üblich sind, erfasst werden. Durch weitere Drehung des plattenartigen Fortsatzes von der Öffnungsstellung in die Schließ- bzw. Spannstellung greift der Fortsatz in den Spannhaken der Plane ein und zieht somit die Plane straff.

Der Fortsatz kann auch ein Langloch zur Aufnahme des Spannhakens aufweisen. Durch das Langloch wird verhindert, dass der Spannhaken seitlich von dem Fortsatz abgleitet. Somit bewirkt das Langloch im Fortsatz eine Verbesserung beim Eingreifen des Fortsatzes in den Spannhaken. Alternativ kann der Fortsatz kettengliedartig ausgebildet sein. Insbesondere kann der Fortsatz mehrteilig ausgebildet sein. Beispielsweise kann der Fortsatz zwei seitliche Elemente aufweisen, die mit der Welle verbunden, insbesondere drehfest verbunden sind. Die beiden seitlichen Elemente können durch ein Verbindungselement gekoppelt sein, wobei das Verbindungselement vorzugsweise parallel zur Welle ausgerichtet ist. Das Verbindungselement kann keinen Rundprofilstab aufweisen. Der Fortsatz mit zwei seitlichen Elementen und dem Verbindungselement bildet gemeinsam mit der Welle ein Bauteil, das einem Kettenglied ähnelt. Durch den Rundprofilstab, der das Verbindungselement bildet, wird besonders einfach sichergestellt, dass ein Spannhaken der Plane beim Übergang des Fortsatzes von der Öffnungsstellung in die Schließstellung erfasst und sicher gegriffen wird.

Gemäß einem nebengeordneten Aspekt beruht die Erfindung auf dem Gedanken, einen Nutzfahrzeugaufbau mit einer Plane zur Abdeckung einer Zugangsöffnung eines Laderaums, die wenigstens einen Spannhaken umfasst, und mit einer zuvor erläuterten Verschlussvorrichtung anzugeben. Der Fortsatz der Verschlussvorrichtung kann dabei in der Schließ- bzw. Spannstellung in den Spannhaken eingreifen und den Spannhaken in der Öffnungsstellung wieder freigeben. Ein derartiger Nutzfahrzeugaufbau hat den Vorteil, dass das Verschließen der Plane vereinfacht und beschleunigt wird.

Bei einer bevorzugten Ausführungsform des erfindungsgemäßen Nutzfahrzeugaufbaus ist der Spannhaken über eine Gewindestange mit der Plane verbunden. Durch die Gewindestange kann die Position des Spannhakens eingestellt werden, beispielsweise um einer gebrauchsbedingten Dehnung der Plane Rechnung zu tragen. Ferner können über die Verstellmöglichkeit durch die Gewindestange Fertigungstoleranzen bei der Planenherstellung ausgeglichen werden.

Der Nutzfahrzeugaufbau kann eine Verschlussvorrichtung aufweisen, die sich über die gesamte Länge oder Breite des Nutzfahrzeugaufbaus erstreckt. Ferner kann vorgesehen sein, dass entlang einer Laderaumöffnung des Nutzfahrzeugaufbaus mehrere Verschlussvorrichtungen angeordnet sind. Vorzugsweise ist jeweils eine Verschlussvorrichtung zwischen zwei Rungen des Nutzfahrzeugaufbaus angeordnet. Da die Verschlussvorrichtung auf die Außenseite des Außenrahmens aufgesetzt wird, wird bei dem erfindungsgemäßen Nutzfahrzeugaufbau zusätzlich der Vorteil erreicht, dass die Plane über die gesamte Länge des Nutzfahrzeugaufbaus gerade spannbar ist. Bei bekannten Nutzfahrzeugaufbauten wird die Plane nicht nur nach unten zum Nutzfahrzeugrahmen gespannt, sondern umgreift auch die seitlich über den Außenrahmen vorstehenden Rungen. Die Plane ist also im Bereich der Rungen nach außen gewölbt, so dass im Bereich der Rungen Feuchtigkeit unter der Plane in den Nutzfahrzeugaufbau eindringen kann. Die erfindungsgemäße Verschlussvorrichtung weist vorzugsweise etwa dieselbe Breite bzw. Tiefe wie die Rungen auf, so dass die Plane im gespannten Zustand gerade entlang der Außenwand des Nutzfahrzeugaufbaus verläuft. Dadurch wird die Dichtigkeit des Nutzfahrzeugaufbaus erhöht.

Die Erfindung wird im Folgenden anhand von Ausführungsbeispielen unter Bezugnahme auf die beigefügten schematischen Zeichnungen näher erläutert. Darin zeigen
- Fig. 1: einen Teilschnitt durch einen Nutzfahrzeugaufbau mit der erfindungsgemäßen Verschlussvorrichtung nach einem bevorzugten Ausführungsbeispiel;
- Fig. 2, 4, 6, 8: jeweils eine perspektivische Ansicht der erfindungsgemäßen Verschlussvorrichtung gemäß Fig. 1 mit unterschiedlichen Stellungen des Fortsatzes an der Welle;
- Fig. 3, 5, 7, 9: jeweils einen Teilquerschnitt durch einen Nutzfahrzeugaufbau mit der Verschlussvorrichtung gemäß Fig. 1 in unterschiedlichen Betätigungsstadien;
- Fig. 10: eine Seitenansicht eines Nutzfahrzeugaufbaus mit der Verschluss-vorrichtung gemäß Fig. 1; und
- Fig. 11: eine perspektivische Ansicht einer Seitenwand eines Nutzfahrzeugaufbaus mit mehreren Verschlussvorrichtungen gemäß Fig. 1.

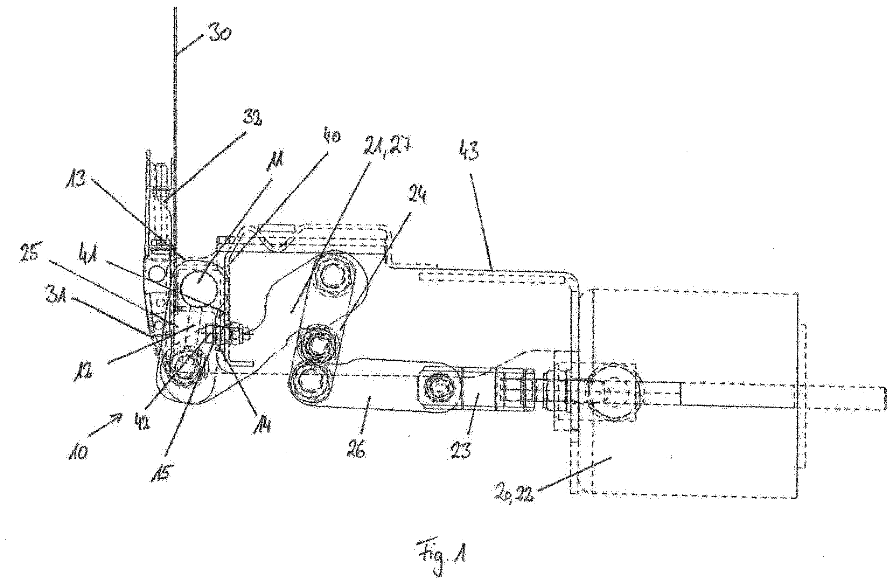

Der Teilquerschnitt gemäß Fig. 1 zeigt einen Außenrahmen 40 des Nutzfahrzeugaufbaus, der durch ein mehrfach abgekantetes Profilelement gebildet ist. Der Außenrahmen 40 weist eine Außenseite 41 auf, die sich vertikal erstreckt. Der Nutzfahrzeugaufbau umfasst ferner eine Plane 30, die mit Spannhaken 31 versehen ist. Die Plane 30 überdeckt die Außenseite 41 und kann sowohl in Längsrichtung (horizontal) als auch in Höhenrichtung (vertikal) gespannt werden. Die Spannhaken 31 sind durch eine Gewindestange 32 mit der Plane 30 verbunden. Auf diese Weise kann die Position der Spannhaken 31 eingestellt werden, beispielsweise um Fertigungstoleranzen auszugleichen.

Die Spannhaken 31 entsprechen im Wesentlichen standardisierten Spannhaken für Planenfahrzeuge, wobei die Spannhaken angepasst sind, um in den Außenrahmen 40 des Nutzfahrzeugs bzw. Nutzfahrzeugaufbaus einzugreifen. Die Spannhaken 31 umfassen entsprechende Spannhebel, durch die die Plane in der Verschlussstellung gespannt werden kann.

Nutzfahrzeuge bzw. Nutzfahrzeugaufbauten, insbesondere Sattelauflieger, die eine Plane 30, insbesondere eine Seitenplane, umfassen, weisen auf jeder Seite mehrere Spannhaken 31 auf. Bei Sattelaufliegern können beispielsweise pro Fahrzeugseite 18 Spannhaken 31, also insgesamt 36 Spannhaken 31 vorgesehen sein. Grundsätzlich ist auch eine andere Anzahl von Spannhaken 31 pro Fahrzeugseite möglich. Mit anderen Worten ist die Anzahl an Spannhaken 31 variabel.

Zum Öffnen oder Verschließen der Plane 30 bzw. der durch die Plane 30 überdeckten Zugangsöffnung 35 zu einem Laderaum des Nutzfahrzeugaufbaus sind die einzelnen Spannhaken 31 einzeln zu betätigen. Dies führt zu einem erhöhten Zeitaufwand.

Die erfindungsgemäße Verschlussvorrichtung 10 reduziert den Zeitaufwand, da die Betätigung mehrerer Spannhaken 31 gleichzeitig und automatisiert erfolgt. Die Verschlussvorrichtung 10 ist derart konstruiert, dass sie einfach an bestehenden Nutzfahrzeugaufbauten nachrüstbar ist und die vorhandenen Spannhaken 31 weiterhin vorteilhaft nutzt. Konkret weist die Verschlussvorrichtung 10 Greifelemente, insbesondere paddelartige Fortsätze 12, auf, die derart angeordnet sind, dass ihre Position mit der Position der Spannhaken 31 korreliert.

Der Aufbau der Verschlussvorrichtung 10 wird im Folgenden näher erläutert:
Die Verschlussvorrichtung 10 umfasst eine Welle 11, die drehbar in einer Wellenaufnahme 13 gelagert ist. Die Wellenaufnahme 13 bildet insbesondere ein Gehäuse, das die Welle 11 zumindest abschnittsweise umschließt bzw. umgreift. Konkret ist vorgesehen, dass das Gehäuse 13 durch ein Profilelement gebildet ist, das wenigstens einen horizontalen Schenkel und einen vertikalen Schenkel umfasst, wobei der horizontale Schenkel im montierten Zustand der Verschlussvorrichtung 10 oberhalb der Welle 11 angeordnet ist. Der vertikale Schenkel erstreckt sich
parallel zur Außenseite 41 des Außenrahmens 40. Im Allgemeinen überdeckt das Gehäuse bzw. die Wellenaufnahme 13 die Welle 11 derart, dass die Welle 11 vor Beschädigungen, insbesondere beim Be- und Entladevorgang, geschützt ist.

Die Welle 11 weist wenigstens einen seitlichen Fortsatz 12 auf, der bei dem Ausführungsbeispiel gemäß Fig. 1 im Wesentlichen radial von der Wellenachse ausgeht. Der Fortsatz 12 ist im dargestellten Ausführungsbeispiel klappenartig bzw. paddelartig ausgebildet und einteilig mit der Welle 11 verbunden. Es ist möglich, dass der Fortsatz 12 ein Langloch aufweist, das angepasst ist, um den Spannhaken 31 aufzunehmen. Ferner kann der Fortsatz 12 mehrteilig, insbesondere kettengliedartig, ausgebildet sein. Im Allgemeinen kann der Fortsatz 12 ein separates Bauteil bilden, das mit der Welle 11 fest, insbesondere drehfest verbunden ist. Beispielsweise kann der Fortsatz 12 mit der Welle 11 durch Schweißen oder Schrauben verbunden sein.

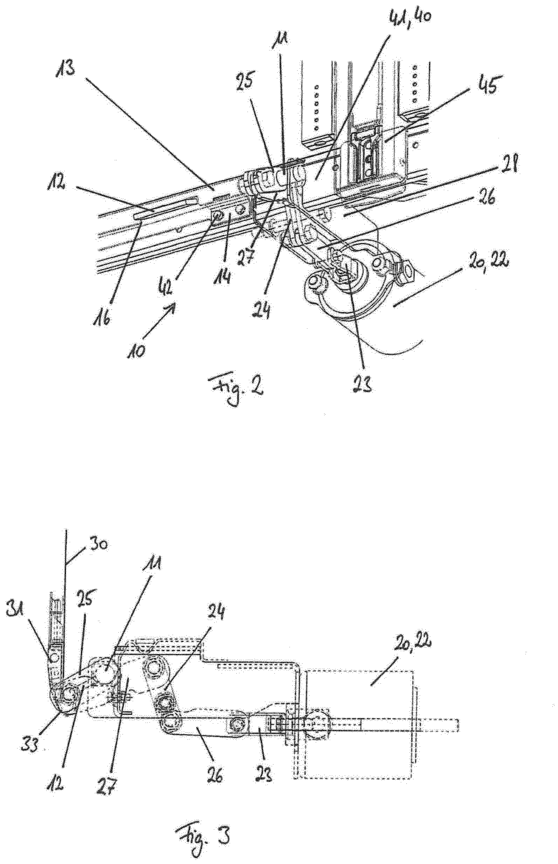

Die Wellenaufnahme 13 weist vorzugsweise mehrere Ausnehmungen 16 auf, durch die sich jeweils ein seitlicher Fortsatz 12 erstreckt (Fig. 2). Im Allgemeinen ist vorgesehen, dass die Welle 11 mehrere Fortsätze 12 aufweist, die in regelmäßigen Abständen entlang der Welle 11 angeordnet sind. Beispielsweise kann die Welle 11 insgesamt fünf Fortsätze 12 umfassen. Eine andere Anzahl von Fortsätzen 12 ist möglich. Die Wellenaufnahme 13 weist eine entsprechende Anzahl von Ausnehmungen 16 auf.

Die Wellenaufnahme 13 weist ferner einen seitlich vorstehenden Flansch 14 auf, der sich im montierten Zustand der Verschlussvorrichtung 10 vorzugsweise vertikal nach unten erstreckt. Der Flansch 14 kann sich über einen Längenabschnitt der Wellenaufnahme 13 erstrecken. Es ist auch möglich, dass sich der Flansch 14 über die gesamte Länge der Wellenaufnahme 13 erstreckt. Vorzugsweise ist zumindest an den Längsenden der Wellenaufnahme 13 jeweils ein Flansch vorgesehen. Der Flansch 14 weist wenigstens eine, insbesondere zwei, Durchgangsbohrungen 15 auf. Die Durchgangsbohrungen 15 sind zur Aufnahme von Schrauben angepasst, die den Flansch 14 und somit die Wellenaufnahme 13 mit dem Außenrahmen 40 des Nutzfahrzeugaufbaus verbinden. Auf diese Weise kann die Verschlussvorrichtung 10 einfach an einen bestehenden Außenrahmen 40 eines Nutzfahrzeugaufbaus angebracht werden.

Damit ist eine einfache und schnelle Nachrüstbarkeit gewährleistet. Anstelle einer Schraubverbindung kann auch vorgesehen sein, die Verschlussvorrichtung 10, insbesondere die Wellenaufnahme 13 mit dem Außenrahmen 40 durch Nieten oder Schweißen zu verbinden. Generell ist vorgesehen, dass die Wellenaufnahme 13 angepasst ist, um an einen bestehenden Außenrahmen 40 nachträglich angebracht zu werden. Eine lösbare Befestigung, beispielsweise durch Schrauben, ist bevorzugt, um die Wartungs- und
Reparaturfreundlichkeit zu erhöhen.

Die Verschlussvorrichtung 10 umfasst ferner eine Betätigungseinrichtung 20, die durch eine Doppelschwinge 21 mit der Welle 11 gekoppelt ist. Die Betätigungseinrichtung 20 umfasst einen Antrieb 22, wobei der Antrieb 22 als pneumatischer oder elektrischer oder hydraulischer Antrieb ausgebildet sein kann. Die Betätigungseinrichtung 20 kann ferner einen Federspeicher umfassen, so dass bei einer Fehlfunktion des Antriebs 22 gewährleistet ist, dass die Verschlussvorrichtung 10 in die Schließstellung überführt bzw. die Schließstellung beibehalten wird.

Der Antrieb 22 ist vorzugsweise als Linearantrieb ausgebildet, um die Baugröße der Verschlussvorrichtung 10 gering zu halten. Der Antrieb 22 ist durch einen Gabelkopf 23 mit einer ersten Koppel 26 verbunden. Die erste Koppel 26 verbindet den Gabelkopf 23 mit einer ersten Schwinge 24 der Doppelschwinge 21. Die erste Schwinge 24 ist drehbar in einem Mechanikgehäuse 28 gelagert. Das Mechanikgehäuse 28 nimmt die Doppelschwinge 21 auf und schützt diese vor Verschmutzung und Beschädigung. Insbesondere ermöglicht das Mechanikgehäuse 28 eine einfache Montage der Betätigungseinrichtung 20 unterhalb eines Ladebodens 43 des Nutzfahrzeugaufbaus.

Die erste Schwinge 24 ist durch eine zweite Koppel 27 mit einer zweiten Schwinge 25 gekoppelt. Die zweite Schwinge 25 ist drehfest mit der Welle 11 verbunden.

In den Fig. 2, 4, 6, 8 ist der kinematische Ablauf beim Überführen der Verschlussvorrichtung 10 bzw. der Fortsätze 12 in die Schließstellung dargestellt. Die Fig. 3, 5, 7 und 9 zeigen denselben kinematischen Ablauf in einer Teilschnittansicht durch den Nutzfahrzeugaufbau bzw. die Verschlussvorrichtung 10.

In den Fig. 2 und 3 ist die Verschlussvorrichtung 10 in einer Öffnungsstellung dargestellt. Der Fortsatz 12 bzw. das Fangpaddel ragt seitlich über die Wellenaufnahme 13 hervor. Insbesondere nimmt der Fortsatz 12 eine annähernd horizontale Stellung ein. Wie in Fig. 3 erkennbar ist, ist die Plane 30 herabgelassen, so dass der Spannhaken 31 seitlich auf Höhe des Außenrahmens 40 angeordnet ist. Der Spannhaken 31 hängt lose auf Höhe des Außerahmens 40. Der nach außen gedrehte Fortsatz 12 ist oberhalb eines Hakenabschnitts 33 des Spannhakens 31 angeordnet. Insbesondere drückt der Fortsatz 12 die Plane 30, die ohne den herausgedrehten Fortsatz 12 direkt an der Wellenaufnahme 13 anliegen würde, seitlich nach außen, so dass der Spannhaken 31, insbesondere der Hakenabschnitt 33 selbsttätig unterhalb des Fortsatzes 12 angeordnet wird.

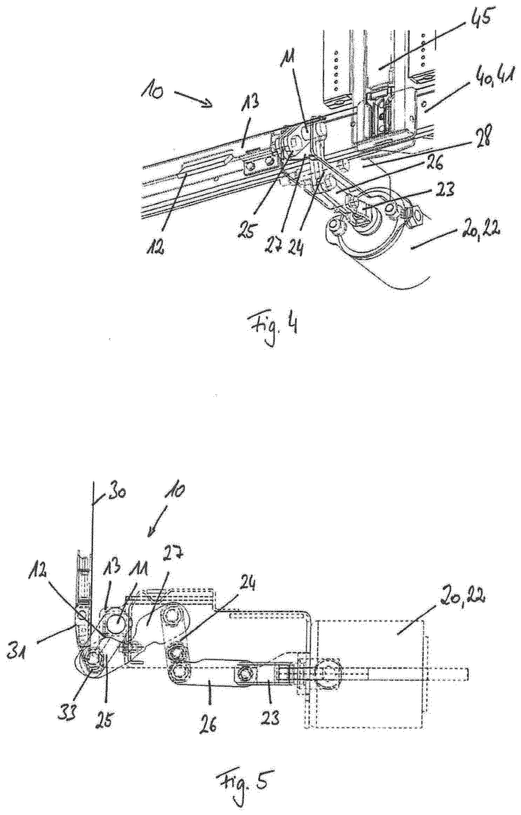

Zum Verschließen bzw. Spannen der Plane 30 wird die Betätigungseinrichtung, insbesondere der Antrieb 22 betätigt, wodurch der Gabelkopf 23 in Richtung der Welle 11 bzw. der ersten Schwinge 24 bewegt wird. Dadurch erfolgt eine Rotation der ersten Schwinge 24, die über die Koppel 27 in eine gegenläufige Rotation der zweiten Schwinge 25 umgesetzt wird. Auf diese Weise wird der Fortsatz 12 um die Wellenachse der Welle 11 rotiert. Zum Verschließen der Plane 30 rotiert der Fortsatz 12 gemäß der Darstellung in den beigefügten Figuren im Gegenuhrzeigersinn. Der Fortsatz 12 greift dabei in den Hakenabschnitt 33 des Spannhakens 31 ein, wie in Fig. 5 gezeigt ist. Dabei wird der Spannhaken 31 und somit auch die Plane 30 nach unten und gleichzeitig in Richtung des Außenrahmens 40 gezogen.

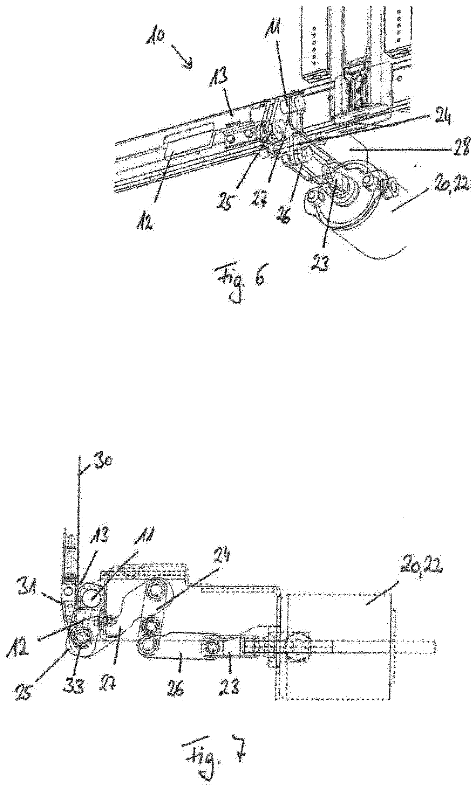

In den Fig. 6 und 7 ist die Verschlussvorrichtung 10 in einer weiteren Stellung, insbesondere kurz vor dem vollständigen Verschlusszustand, dargestellt. Darin ist zu erkennen, dass der Fortsatz 12 weitergedreht ist, so dass der Fortsatz 12 im Wesentlichen eine 7-Uhr-Stellung einnimmt. Der Gabelkopf 23 ist gegenüber der vorherigen Stellung, die in den Fig. 4 und 5 dargestellt ist, weiter vom Antrieb 22 entfernt. Im Allgemeinen führt der Antrieb 22 beim Übergang der Verschlussvorrichtung 10, insbesondere des Fortsatzes 12, von einer Öffnungsstellung in die Schließstellung bzw. Spannstellung eine Bewegung aus, die eine nach außen, also in Richtung des Außenrahmens 40 orientierte Richtung aufweist.

In Fig. 7 ist gut erkennbar, dass der Hakenabschnitt 33 des Spannhakens 31 den Fortsatz 12 im Wesentlichen vollständig umgreift. Beim Übergang des Fortsatzes 12 von der Öffnungsstellung in die Schließstellung gelangt der Fortsatz 12 also in Eingriff mit dem Hakenabschnitt 33 des Spannhakens 31.

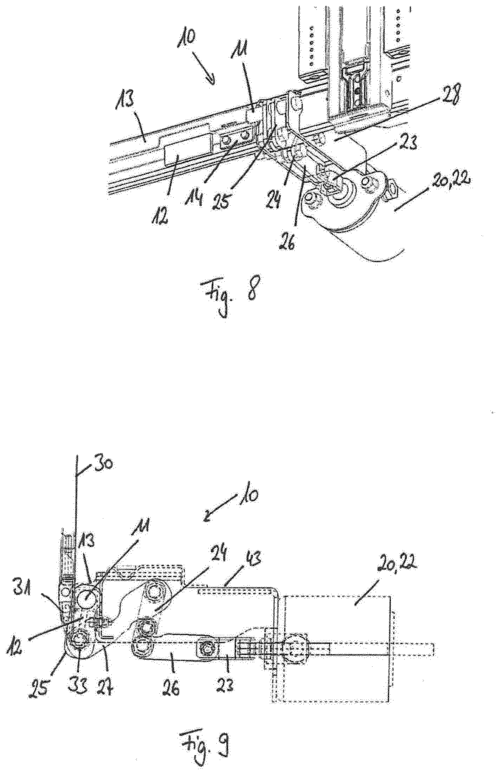

Die Schließstellung der Verschlussvorrichtung 10 bzw. des Fortsatzes 12 ist in den Fig. 8 und 9 gezeigt. In Fig. 8 ist erkennbar, dass der Fortsatz 12 in der Schließstellung nahezu parallel zu der Außenfläche 41 des Außenrahmens 40 angeordnet ist. Dabei wird die maximale Spannung auf die Plane 30 ausgeübt, wie in Fig. 9 erkennbar ist. Die Plane 30 liegt somit bündig an der Wellenaufnahme 13 an.

In Fig. 9 ist überdies die vergleichsweise kompakte Bauform der Verschlussvorrichtung 10 erkennbar. Insbesondere die Doppelschwinge 21 ist derart ausgebildet, dass sie unter dem Ladeboden 43 des Nutzfahrzeugaufbaus angeordnet ist. Der Außenrahmen 40 weist in diesem Bereich einen Freiraum auf, der ausreicht, um die Betätigungseinrichtung 20 und die Doppelschwinge 21 anzubringen.

Es ist vorteilhaft vorgesehen, dass entlang eines Nutzfahrzeugaufbaus mehrere Verschlussvorrichtungen 10 angeordnet sind. Dabei ist nicht ausgeschlossen, dass entlang eines Nutzfahrzeugaufbaus, insbesondere entlang einer Seite eines Nutzfahrzeugaufbaus, eine einzige Verschlussvorrichtung 10 angeordnet ist, die sich über die gesamte Länge des Nutzfahrzeugaufbaus erstreckt.

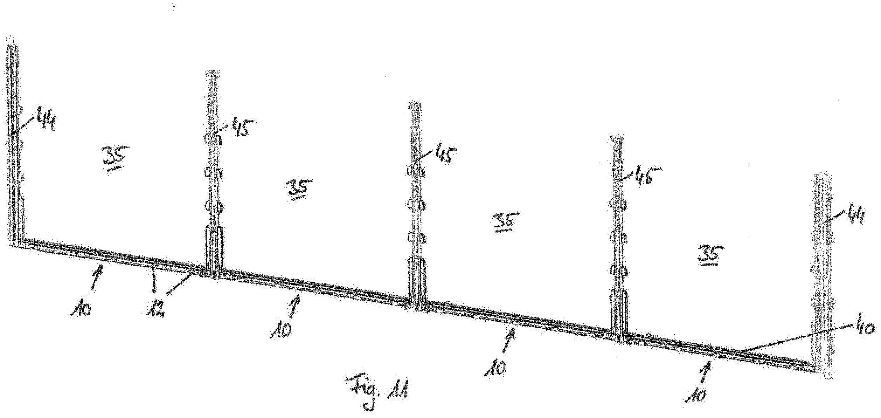

Im Allgemeinen weisen Nutzfahrzeugaufbauten, insbesondere Planensattelauflieger, Eckrungen 44 auf, die die Seiten des Nutzfahrzeugaufbaus in Längsrichtung begrenzen. Zwischen den Eckrungen 44 sind in regelmäßigen Abständen Rungen 45 angeordnet, die vorzugsweise an der Außenfläche 41 des Außenrahmens 40 angebracht sind. Die Eckrungen 44 und die Rungen 45 stützen ein Dach bzw. allgemein eine Dachkonstruktion des Nutzfahrzeugaufbaus. Bei bekannten Planensattelaufliegern sind vorzugsweise drei Rungen 45 zwischen zwei Eckrungen 44 angeordnet (Fig. 11). Die Rungen 45 unterteilen den Außenrahmen 40 in
Segmente, wobei in den insgesamt vier Segmenten vorzugsweise jeweils eine Verschlussvorrichtung 10 angeordnet ist.

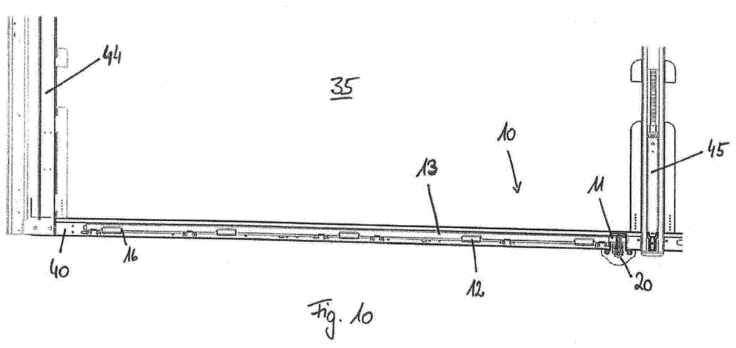

Die Verschlussvorrichtung 10 erstreckt sich zwischen zwei Rungen 45, oder, wie in Fig. 10 dargestellt, zwischen einer Eckrunge 44 und einer Runge 45. Die Verschlussvorrichtung weist eine Welle 11 mit insgesamt fünf Fortsätzen 12 auf. Die Welle 11 ist in der gehäuseartig ausgebildeten Wellenaufnahme 13 angeordnet. Entsprechend zu den fünf Fortsätzen 12 weist die Wellenaufnahme 13 fünf Ausnehmungen 16 auf. Die Wellenaufnahme 13 umfasst mehrere Flansche 14, über die die Wellenaufnahme 13 mit dem Außenrahmen 40 verbunden ist.

Die Welle 11 erstreckt sich über ein Längsende der Wellenaufnahme 13 hinaus. An dem Längsende der Welle 11, das sich über die Wellenaufnahme 13 hinaus erstreckt, ist die Doppelschwinge 21 angeordnet. Unterhalb der Ladefläche 43 des Nutzfahrzeugaufbaus ist die Betätigungseinrichtung 20 vorgesehen.

Die nachgerüstete Verschlussvorrichtung weist einen zusätzlichen Vorteil auf, der im Hinblick auf die Fig. 10 und 11 erkennbar ist. Die Rungen 45 sind bei bekannten Nutzfahrzeugaufbauten auf dem Außenrahmen 40 befestigt. Beim Spannen der Plane 30 mit den Spannhaken 31 am Außenrahmen 40, also ohne Verschlussvorrichtung 10, spannt sich die Plane über die Rungen 45 und wird somit im Bereich der Rungen 45 vom Außenrahmen 40 weggedrückt. Dadurch ist verhindert, dass sich eine glatte Planenfläche einstellt. Vielmehr ist die Plane 30 vom Außenrahmen 40 ausgehend über die Runge 45 gewölbt. Zwischen dem Außenrahmen 40 der Runge 45 und der Plane 30 entsteht somit eine im Wesentlichen dreieckförmige Öffnung, durch die Feuchtigkeit in den Laderaum eindringen kann.

Die Verschlussvorrichtung 10 wird ebenfalls außen auf den Außenrahmen 40 angeordnet und baut somit auf dem Außenrahmen 40 auf. Die Tiefe der Verschlussvorrichtung 10, insbesondere der Wellenaufnahme 13, entspricht vorzugsweise im Wesentlichen der Tiefe der Runge 45. Dadurch wird erreicht, dass sich die Plane zwischen zwei Rungen 45 bzw. zwischen einer Eckrunge 44 und einer Runge 45, nicht an den Außenrahmen 40 direkt anlegt, sondern entlang der Wellenaufnahme 13 verläuft. Somit wird die Plane 30 über die gesamte Länge des Nutzfahrzeugaufbaus flach gespannt. Die Dichtigkeit des Nutzfahrzeugaufbaus wird dadurch verbessert.

### Bezugszeichenliste

- 10: Verschlussvorrichtung
- 11: Welle
- 12: Fortsatz
- 13: Wellenaufnahme
- 14: Flansch
- 15: Durchgangsbohrung
- 16: Ausnehmung
- 20: Betätigungseinrichtung
- 21: Doppelschwinge
- 22: Antrieb
- 23: Gabelkopf
- 24: erste Schwinge
- 25: zweite Schwinge
- 26: erste Koppel
- 27: zweite Koppel
- 28: Mechanikgehäuse
- 30: Plane
- 31: Spannhaken
- 32: Gewindestange
- 33: Hakenabschnitt
- 35: Zugangsöffnung
- 40: Außenrahmen
- 41: Außenseite
- 42: Schraube
- 43: Ladeboden
- 44: Eckrunge
- 45: Runge

## Patentansprüche

1. Verschlussvorrichtung (10) für eine Plane (30) eines Nutzfahrzeugaufbaus mit einer Welle (11), die wenigstens einen seitlichen Fortsatz (12) aufweist, der zum Eingriff in einen Spannhaken (31) der Plane (30) angepasst ist, wobei die Welle (11) mit einer Betätigungseinrichtung (20) gekoppelt ist derart, dass der Fortsatz (12) durch die Betätigungseinrichtung (20) von einer Öffnungsstellung in eine Schließ- bzw. Spannstellung bewegbar ist, **dadurch gekennzeichnet, dass**
die Welle (11) in einer Wellenaufnahme (13) drehbar gelagert ist, die ein die Welle (11) zumindest abschnittsweise umschließendes Gehäuse bildet und mit einer Außenfläche (41) eines Außenrahmens (40) des Nutzfahrzeugaufbaus verbindbar ist.

2. Verschlussvorrichtung (10) nach Anspruch 1,
**dadurch gekennzeichnet, dass**
die Wellenaufnahme (13) wenigstens einen seitlich vorstehenden Flansch (14) mit wenigstens einer Durchgangsbohrung (15) für die Aufnahme von Schrauben (42) zur Verbindung mit dem Außenrahmen (40) aufweist.

3. Verschlussvorrichtung (10) nach Anspruch 1 oder 2,
**dadurch gekennzeichnet, dass**
die Betätigungseinrichtung (20) einen Linearantrieb aufweist, der durch eine Doppelschwinge (21) mit der Welle (11) gekoppelt ist.

4. Verschlussvorrichtung (10) nach einem der Ansprüche 1 bis 3,
**dadurch gekennzeichnet, dass**
die Betätigungseinrichtung (20) einen Federspeicher umfasst.

5. Verschlussvorrichtung (10) nach einem der Ansprüche 1 bis 4,
**dadurch gekennzeichnet, dass**
die Betätigungseinrichtung (20) unterhalb eines Ladebodens (43) des Nutzfahrzeugaufbaus anordenbar ist.

6. Verschlussvorrichtung nach einem der Ansprüche 1 bis 5,
**dadurch gekennzeichnet, dass**
der Fortsatz (12) plattenartig oder paddelartig ausgebildet ist.

7. Verschlussvorrichtung (10) nach einem der Ansprüche 1 bis 6,
**dadurch gekennzeichnet, dass**
der Fortsatz (12) ein Langloch zur Aufnahme des Spannhakens (31) aufweist.

8. Verschlussvorrichtung (10) nach einem der Ansprüche 1 bis 7,
**dadurch gekennzeichnet, dass**
der Fortsatz (12) kettengliedartig ausgebildet ist.

9. Verschlussvorrichtung (10) nach einem der Ansprüche 1 bis 8,
**dadurch gekennzeichnet, dass**
die Verschlussvorrichtung (10) eine an einem bestehenden Nutzfahrzeug nachrüstbare Baueinheit bildet.

10. Nutzfahrzeugaufbau mit einer Plane (30) zur Abdeckung einer Zugangsöffnung (35) eines Laderaums, wobei die Plane (30) wenigstens einen Spannhaken (31) umfasst, und mit einer Verschlussvorrichtung (10) nach einem der vorhergehenden Ansprüche, wobei der Fortsatz (12) in der Schließ- bzw. Spannstellung in den Spannhaken (31) eingreift und in der Öffnungsstellung den Spannhaken (31) freigibt.

11. Nutzfahrzeugaufbau nach Anspruch 10,
**dadurch gekennzeichnet, dass**
der Spannhaken (31) über eine Gewindestange (32) mit der Plane (30) verbunden ist.

12. Nutzfahrzeugaufbau nach Anspruch 10 oder 11,
**dadurch gekennzeichnet, dass**
eine Verschlussvorrichtung (10) vorgesehen ist, die sich über die gesamte Länge oder die gesamte Breite des Nutzfahrzeugaufbaus erstreckt.

13. Nutzfahrzeugaufbau nach Anspruch 10 oder 11,
**dadurch gekennzeichnet, dass**
mehrere Verschlussvorrichtungen (10) entlang der gesamten Länge oder gesamten Breite des Nutzfahrzeugaufbaus einander nachgeordnet angeordnet sind.

14. Nutzfahrzeugaufbau nach einem der Ansprüche 10 bis 13,
**dadurch gekennzeichnet, dass**
die Verschlussvorrichtung (10) mit einem Außenrahmen (40) des Nutzfahrzeugaufbaus fest verbunden ist.

15. Nutzfahrzeugaufbau nach Anspruch 14,
**dadurch gekennzeichnet, dass**
die Verschlussvorrichtung (10) mit dem Außenrahmen (40) schweißverbunden ist.

## Claims

1. A locking device (10) for the tarpaulin (30) of a commercial vehicle structure with a shaft (11), which comprises at least one lateral extension (12), which is adapted to engage in a tensioning hook (31) of the tarpaulin (30), wherein the shaft (11) is coupled with an actuating device (20) in such a manner that the actuating device (20) is able to move the extension (12) from an open position into a closed, or tensioned, position, **characterized in that** the shaft (11) is mounted rotatably in a shaft receptacle (13), which forms a housing that surrounds the shaft (11) at least in sections and which can be connected to an exterior surface (41) of an exterior frame (40) of the commercial vehicle structure.

2. The locking device (10) according to Claim 1, **characterized in that** the shaft receptacle (13) comprises at least one laterally protruding flange (14) with at least one through bore (15) for receiving bolts (42) for connecting the shaft receptacle (13) to the exterior frame (40).

3. The locking device (10) according to Claim 1 or 2, **characterized in that** the actuating device (20) comprises a linear drive, which is coupled with the shaft (11) via a double rocker (21).

4. The locking device (10) according to one of the Claims 1 to 3, **characterized in that** the actuating device (20) comprises a spring accumulator.

5. The locking device (10) according to one of the Claims 1 to 4, **characterized in that** the actuating device (20) can be arranged below a load deck (43) of the commercial vehicle structure.

6. The locking device according to one of the Claims 1 to 5, **characterized in that** the extension (12) is designed in a panel shape or paddle shape.

7. The locking device (10) according to one of the Claims 1 to 6, **characterized in that** the extension (12) comprises a slot for receiving the tensioning hook (31) .

8. The locking device (10) according to one of the Claims 1 to 7, **characterized in that** the extension (12) is designed in the manner of a chain link.

9. The locking device (10) according to one of the Claims 1 to 8, **characterized in that** the locking device (10) is a component, which may be retrofitted to an existing commercial vehicle.

10. A commercial vehicle structure with a tarpaulin (30) for covering an access opening (35) of a load compartment, wherein the tarpaulin (30) comprises at least one tensioning hook (31), and with a locking device (10) according to one of the preceding claims, wherein the extension (12) engages in the tensioning hook (31) in its closed, or tensioned, position and releases the tensioning hook (31) in its open position.

11. The commercial vehicle structure according to Claim 10, **characterized in that** the tensioning hook (31) is connected to the tarpaulin (30) via a threaded rod (32) .

12. The commercial vehicle structure according to Claim 10 or 11, **characterized in that** a locking device (10) is provided, which extends over the entire length or the entire width of the commercial vehicle structure.

13. The commercial vehicle structure according to Claim 10 or 11, **characterized in that** multiple locking devices (10) are arranged successively along the entire length or the entire width of the commercial vehicle structure.

14. The commercial vehicle structure according to one of the Claims 10 to 13, **characterized in that** the locking device (10) is firmly attached to an exterior frame (40) of the commercial vehicle structure.

15. The commercial vehicle structure according to Claim 14, **characterized in that** the locking device (10) is welded to the exterior frame (40).

## Revendications

1. Dispositif de fermeture (10) pour une bâche (30) d'une structure de véhicule utilitaire avec un arbre (11) présentant au moins un prolongement latéral (12), lequel est adapté pour s'engager dans un crochet de serrage (31) de la bâche (30), l'arbre (11) étant couplé à un dispositif d'actionnement (20) de manière à ce que le prolongement (12) puisse être déplacé par le dispositif d'actionnement (20) d'une position d'ouverture vers une position de fermeture ou de serrage, **caractérisé en ce que** l'arbre (11) est monté de façon rotative dans un logement d'arbre (13) formant un boîtier entourant au moins partiellement l'arbre (11) et pouvant être relié à une surface extérieure (41) d'un châssis extérieur (40) de la structure de véhicule utilitaire.

2. Dispositif de fermeture (10) selon la revendication 1, **caractérisé en ce que** le logement d'arbre (13) présente au moins une bride (14) faisant saillie latéralement avec au moins un alésage traversant (15) pour la réception de vis (42) pour l'assemblage avec le châssis extérieur (40).

3. Dispositif de fermeture (10) selon la revendication 1 ou 2, **caractérisé en ce que** le dispositif d'actionnement (20) présente un entraînement linéaire couplé à l'arbre (11) par le biais d'un double bras oscillant (21).

4. Dispositif de fermeture (10) selon l'une des revendications 1 à 3, **caractérisé en ce que** le dispositif d'actionnement (20) comporte un accumulateur à ressort.

5. Dispositif de fermeture (10) selon l'une des revendications 1 à 4, **caractérisé en ce que** le dispositif d'actionnement (20) peut être disposé sous le plancher de chargement (43) de la structure de véhicule utilitaire.

6. Dispositif de fermeture selon l'une des revendication 1 à 5, **caractérisé en ce que** le prolongement (12) est conçu à la manière plaque ou d'une pale.

7. Dispositif de fermeture (10) selon l'une des revendications 1 à 6, **caractérisé en ce que** le prolongement (12) présente un trou oblong pour la réception du crochet de serrage (31).

8. Dispositif de fermeture (10) selon l'une des revendications 1 à 7, **caractérisé en ce que** le prolongement (12) est conçu à la manière d'un maillon de chaîne.

9. Dispositif de fermeture (10) selon l'une des revendications 1 à 8, **caractérisé en ce que** le dispositif de fermeture (10) forme une unité de construction susceptible d'être ajoutée sur un véhicule utilitaire existant.

10. Structure de véhicule utilitaire avec une bâche (30) destinée à recouvrir une ouverture d'accès (35) d'un espace de chargement, la bâche (30) comportant au moins un crochet de serrage (31), et avec un dispositif de fermeture (10) selon l'une des revendications précédentes, le prolongement (12) s'engageant dans le crochet de serrage (31) dans la position de fermeture ou de serrage et se dégageant du crochet de serrage (31) dans la position d'ouverture.

11. Structure de véhicule utilitaire selon la revendication 10, **caractérisée en ce que** le crochet de serrage (31) est relié à la bâche (30) par le biais d'une tige filetée (32).

12. Structure de véhicule utilitaire selon la revendication 10 ou 11, **caractérisée en ce que** il est prévu un dispositif de fermeture (10) s'étendant sur toute la longueur ou sur toute la largeur de la structure de véhicule utilitaire.

13. Structure de véhicule utilitaire selon la revendication 10 ou 11, **caractérisée en ce que** plusieurs dispositifs de fermeture (10) sont disposés les uns après les autres le long de toute la longueur ou de toute la largeur de la structure de véhicule utilitaire.

14. Structure de véhicule utilitaire selon l'une des revendications 10 à 13, **caractérisée en ce que** le dispositif de fermeture (10) est relié fixement à un châssis extérieur (40) de la structure de véhicule utilitaire.

15. Structure de véhicule utilitaire selon la revendication 14, **caractérisée en ce que** le dispositif de fermeture (10) est relié au châssis extérieur (40) par soudage.
